# EUROPEAN PATENT APPLICATION

(11) **EP 3 518 157 A1**
(43) Date of publication of application: **31.07.2019**
(21) Application number: 19151439.7
(22) Date of filing: 11.01.2019
(51) Int. Cl.: G06Q 10/06, G06Q 10/10, G06Q 50/10

(54) **DIGITAL ELECTRONIC STORAGE COMPUTER SYSTEM**

(30) Priority: 29.01.2018 IT 201800002108
(71) Applicant: Savino Solution S.r.l., 84122 Salerno (SA) (IT)
(72) Inventor: SAVINO, Nicola, I-84122 SALERNO (SA) (IT)
(74) Representative: Fiammenghi, Eva

(57) **Abstract**

Digital storage computer system, characterized by generating storage packets (114) starting from transfer packets (111) made up of any type of digital data; said system allowing the manager (102) to affix digital signatures with time stamps and geolocation; said system allowing the release of the stored data by generating authenticated distribution packets (115); said system based on an accessible digital platform: a) internally from terminals (241) and acquisition devices (242); b) externally from mobile devices (500) or web browsers; said system comprising:
(A) a document which manages the data not yet subjected to storage procedure and allows:
- managing the register of producers (101) and managers (102);
- generating transfer packets (111);
- selecting storage packets (113) using filters 306;

(B) a subsystem that generates storage packets (114), transfers them to long-term memory (214) and allows:
- producing a report of the verification, underlining possible critical areas;
- consulting the data contained in the storage packet (114);
- exporting distribution packets (115);

(C) a series of accessory features:
- a digital signature server (221);
- a notification subsystem (222;
- a log server (213).

## Description

### Field of the invention

The present invention relates in the field of digital storage. In particular, the proposed invention relates to a system and a method for the digital electronic storage of documents, data and metadata, in compliance with the requirements of the various regulations and based on a digital platform that guarantees the authenticity and unalterability of the information.

### Prior art

In the prior art, a large number of solutions are available to transfer the documents traditionally stored in paper format onto digital media. The dematerialization - or digitization - of the documents originates from the need to fully exploit the innumerable potential offered by the digital tool, among which is the simplicity and cost-effectiveness of archiving and the speed of information retrieval, as well, especially in light of the recent availability of distributed databases, the ability to access documents on the move. The digital tool is without doubt the predominant means of fruition of knowledge and increasingly larger quantities of data are produced directly in digital form, both by organizations and individuals, as well as by machines and computers. Moreover, in consideration of the undeniable advantages, more and more material is transferred to digital media, with the intention of improving accessibility and ensuring its preservation. In the academic, librarian and cultural fields in general, the transfer of knowledge on digital support represents the effort to preserve the cultural heritage and requires, in addition to resources and technological solutions, also compliance with essential requirements such as authenticity, conformity to the original and ability to reproduce content over time, countering the phenomenon of digital obsolescence (unavailability of the technology needed to read the data). In other sectors, primarily that of companies and public and private administrations, the challenges posed by digital preservation are increasing, including the problem of ensuring legal validity over time to documents and dematerialized information: it is clear that most of the benefits deriving from the storage in electronic form of the documents would be useless if - in order to give the digital data probative value - it was necessary to keep a hard copy (analogue) of the original. To deal with this problem, every country and organization (for example the European Union) can issue specific directives, which are embodied in procedures and process standards, which determine the ways and times of substitutive storage so that it has, in addition to features natively required (authenticity, reproducibility, integrity, conformity) also legal value, replacing in all respects the paper counterpart. Therefore, these directives must be taken into consideration and integrated into any application solution proposed as a digital storage solution.

Different, but not less felt, is the problem of the security and unalterability of digital data. More and more companies are becoming aware of the vulnerabilities related to the digital tool in terms of unauthorized access and misuse of data. It is necessary not only to ensure that the digitized data conforms to the original, but also - and above all - that the distribution of information takes place in a controlled manner and that there is no risk of changes or alterations subsequent to the archiving of documents. A further element to provide, when a document is transferred from paper to electronic, is the irrefutable identity of a guarantor of the storage process that can be as much an individual as an institution or a central authority that is also digital (like the certifying authorities).

Finally, increasingly often, recently, information is not limited to the document alone, understood as a container - either material or immaterial. Information tends to be an organic and interconnected set of data, which include documents in the traditional sense of the term, but also information from digital archives, database records, dynamic references to external sources. It is therefore highly restrictive, for the systems currently available, not to include the possibility of storing information packets made up of a plurality of data and to restrict the scope of application to traditional documentation only.

Although in the international field there are a good number of patents related to the subject in question, such as U.S. patent US2017011051A1, which relates to an integrated digital-analog storage system capable of autonomously managing data migration to a multimedia library, or patent US2014115450A1 which defines a method for the preservation of legal evidences by means of a client-server system, it is evident that none of them addresses in a systematic and exhaustive manner the criticalities outlined above.

### Description of the invention

According to the present invention, a digital electronic storage computer system is implemented which effectively solves the problems described above, exploiting a multilevel digital platform capable of carrying out all the operations necessary to store and preserve, in compliance with the provisions of the current legislation, documents natively digital or dematerialized. The system has the innovative feature of processing any type of digital data: from the most common document containers (PDF, JPEG, TIFF, ...), images, audio and video, to structured information, binary files, database entries, metadata, and in general any kind of natively digital information. In addition to data and documents, the system will also be able to retain business processes once they have been identified, mapped and possibly re-engineered.

The data will be managed in compliance with the most widespread international standards - such as ISO 15489 - and in particular the information system that is proposed will advantageously generate a record transfer packet (structured set of information) to be converted into a storage packet based on a precise sequence of operations:
- selection and aggregation of records;
- coding of records;
- digital signature extraction (hashing);
- inclusion of metadata: information structure, generating process, links to documents and external data,
- generation of the storage packet.

The storage packets will then be generated from one or more storage packets, which represent the final form in which to carry out the digital storage and of which it will then be possible to request a copy or view, in the form of controlled distribution packets.

An advantageous feature of the system proposed is the possibility of adapting to different norms and standards of substitutive storage and conservation, in compliance with the legal requirements as much as the recommendations and rules of the most widespread international reference models - such as the OAIS (Open Archival Information System) standard or the InterPARES (International Research on Permanent Authentic Records in Electronic Systems) model. The choice of the reference model will involve the reorganization of the processes of the substitutive storage system in order to reflect the rules to be applied regarding the peculiar features of digital substitutive storage:
- Authenticity and conformity of the data;
- integrity and inalterability of the data;
- identification of responsibilities;
- stability and persistence of the data;
- accessibility and reproducibility of the data;
- data protection and security;
- traceability of processes

In order to ensure the authenticity, traceability and compliance of documents, the system will implement, appropriately, the ability to insert temporal markings coming from third and independent certification authorities (TSA - Time Stamping Authority) deemed reliable and according to what is regulated by RFC 3161, ANSI ASC X9.95 and the like. The advantage of using third-party authorities lies in the intrinsic credibility of the issued time stamp, which otherwise could give rise to objections to the validity or transparency of the substitutive conservation process, which is instead guaranteed when an event is scheduled to be timed - which can be the digital signature or the issue of a certified copy. Another advantage of the proposed system is the possibility of combining the time stamp, the geo-referencing of the device used for the signature, the issuing, the replication or the general treatment of the data. The association between time stamp and geolocation will provide the necessary replacement for the traditional declaration of "date and place" of the signing, greatly reducing the possibility of false statements or pre and postdated documents.

The proposed system will advantageously guarantee the inalterability of the stored data and of the storage packets through the use of cutting-edge techniques in the field of cryptography and secure archiving. The primary archive will consist of a long-term mass storage (LTS - Long Term Storage) designed to ensure the readability of data against technological obsolescence. The information contained in the archive must meet specific security requirements and be formally and substantially unchangeable. As a guarantee, the storage system will pass all data from the storage packets to a digital signature generation module (hashing operation). The signature, obtained by means of a unidirectional mathematical algorithm, has the advantageous feature of making it realistically impossible to trace the original datum and can therefore be used - outside the system - for the dual purpose of verifying the conformity of the original data sequence and of constituting proof of integrity from the data. This last aspect is implemented, in the proposed system, by entering the digital signatures of the packets stored in the distributed lists of data blocks (blockchain). Each new element ("block") of the list contains a reference to all the previous elements and is validated by a plurality of peers, which in turn will retain a copy of the list, so as to make it impossible to modify the contents of the list without the explicit intervention of the majority of the parties involved. Even in this case, however, it will always be possible to verify the loss of data integrity.

The core of the digital storage system consists of the document management subsystems with related database and storage and long-term storage that make the primary infrastructure. The infrastructure is supported by a level of presentation consisting of user interfaces and communication protocols and a level of internal or external services. Subsystems and ancillary functionalities will be hosted on dedicated servers, connected in a network in a compartmented infrastructure and connected to a Storage Area Network. The system will interface to the outside via the IP network and will be equipped with protection devices (firewalls) and load balancers. Access will be through reverse proxing of the content generated at the application level. On the internal side of the network, the system will be accessible through specific acquisition terminals or devices such as network scanners or totems equipped with a touch screen and acquisition devices.

The document management subsystem (DMS) is used for the transfer, management and storage of non-stored documents, that is, of the initial data, not yet submitted to the storage procedure, from which to draw for the creation of storage packets. The advantage of using a document system lies in the versatility of use and simplicity of access to content: the system provides a web server that allows connecting via local network, web browser and mobile devices and uses a dedicated database to store the information. The DMS also:
- allows managing natively the registry and the signature parameters of the producers of documents and of the relative managers;
- allows transferring natively digital documents, acquiring analog originals by digitization, introducing primitive data such as records and database rows, adding metadata and accessory information (hash) in order to generate storage packets;
- generates, by the storage manager, a transfer report that certifies the compliance of the data entered with the conformation requirements, possibly rejecting non-compliant data and notifying the event to the manager;
- allows searching and selecting the data contained in the database through categorization, filters and semantic searches;
- it interfaces directly with the storage system, transferring the already aggregated data in the form of storage packets;
- it is equipped with a responsive user interface (UI) for use on all types of devices;
- it provides, advantageously, a control application (dashboard) from which to monitor the system status and access the other features.

The storage subsystem, with relevant long-term storage for access to data stored in the long run, is the other key component of the system. The purpose of the subsystem is to implement the digital substitutive storage by generating, advantageously, storage packets starting from the storage packets created by the DMS. The storage packet is digitally signed by the data storage manager, using a smart card containing signature certificates or electronic devices associated with the manager's digital credentials and equipped with fingerprint readers or other recognition hardware. After signing and integrating the time stamp and geolocation, the packet becomes a substitute document and is transferred to long-term storage for permanent storage. The storage packet is then, advantageously, processed by a hashing algorithm to generate the digital signature, to be kept together with the packet and to be used for integrity checks. The system provides for the use of peer to peer networks to ensure the inalterability of stored documents: the digital signature is therefore inserted in a distributed list block to preserve its validity. The preservation subsystem also allows, advantageously:
- initiating, at any time on request or on schedule, the verification of the integrity of the stored data;
- producing an integrity report following verification, detailing the storage status for each packet and highlighting any critical issues by notifying the manager;
- consulting locally or remotely the data contained in the storage packet, generating a special recording of the view - through timestamping and geolocation;
- exporting to third parties, upon request approved by the manager through digital signature, distribution packets consisting of certified and authenticated copies of the data contained in the archive.
the distribution packets generated by the system can conveniently contain data from one or more storage packets and can be consulted via a search console. The release of information to third parties is always authorized, by means of digital signature, by the storage manager.

The digital storage system furthermore conveniently includes a series of accessory features that respond to storage requirements and, residing on dedicated hardware or being acquired by external service providers, increase the overall efficiency and performance of the system. The following is included, in particular:
- a digital signature suite that manages the release and the life cycle of certificates, interfaces with the higher level certification authorities, connects with external services of timestamping and receives the geolocation coordinates from the devices used for entering data, supplying them to the DMS;
- a subsystem for sending notifications to administrators and managers, equipped with an e-mail server. The subsystem sends informative reports to the storage managers whenever an event related to the storage process occurs (entry of documents, creation of archiving and storage packets, integrity checks, etc.) or when an external action is required, as in the case of consultation requests or the presence of documents in queue for storage; the notifications are transmitted by e-mail or directly on the portable devices of the managers in push mode;
- packet creation and integrity check scheduling subsystem. The subsystem allows scheduling the operations to be performed automatically, at predefined deadlines, without the need for manual intervention. This feature allows managers to not have to worry about starting the storage for their producers, but to intervene only in case of anomalous conditions or errors in the process that will be promptly reported by the notification system. The subsystem allows pre-authorizing the disposal of the storage and consultation queues, using the integrated digital signature suite to validate, on behalf of the manager, the generated or outgoing packets;
- a mobile application server that increases the usability of the system by allowing users of mobile devices (smartphones, tablets, PDAs) to use a software suite designed to extend the functionality of the system by exploiting the potential of the device such as, for example: recognition hardware, fingerprint readers, integrated cameras for acquiring documents on-the-fly, storing digital signature certificates and using the device to digitally sign content;
- a log server (electronic register) that collects and maintains an unalterable trace of all operations performed during the process, including operations performed by system administrators such as: configuration changes, database alteration, notifications sent, the scheduling, start and end of integrity checks, the transfer of data to long-term memory, the acceptance of requests for consultation, etc. The server also allows viewing and exporting the contents of the electronic register and possibly store it in turn as a digital document with legal validity.

Finally, in view of the strategic importance within organizations and in order to further increase the effectiveness of the substitutive storage system, it will be possible to include a substitutive storage scheduling tool among the accessory features. Said accessory tool, with a graphical interface similar to that of the document subsystem, will act as a decision support in the choice of documents to be dematerialized and stored digitally. One will be able to make short, medium and long-term schedules, indicating which information to include in the system and when to enter it. The tool may also, according to the regulations used, produce suggestions on the utility or convenience of dematerializing a particular data: it will be able, for example, to indicate if a document can be dematerialized, eliminating the analogue originals, with the internal resources of the organization alone or if the presence/intervention of an external authority is necessary.

The advantages offered by the present invention are clear in the light of the above description and will be even clearer from the accompanying figures and the related detailed description.

### Description of the figures

The invention will hereinafter be described in at least one preferred embodiment thereof by way of non-limiting example with the aid of the accompanying figures, in which:

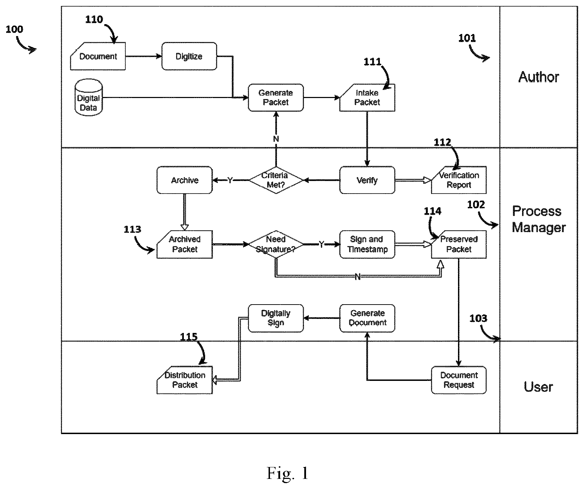

- FIGURE 1 shows the flowchart of the digital substitution storage process 100 executed by the proposed computer system, identifying the parties involved for each sub-step: the data producer 101, the storage manager 102 and the applicant 103. The different documents (analogue or digital) produced are listed in the diagram: the digitized original paper document 110 generates a transfer packet 111, which is submitted to a validity check with the issuing of a verification report 112. If the transfer packet 111 meets the criteria, it is stored in the form of a storage packet 113, possibly digitally signed and subjected to the storage process which in turn produces a storage packet 114. On request, it is possible to extract a distribution packet 115, authenticated and conforming to the original.

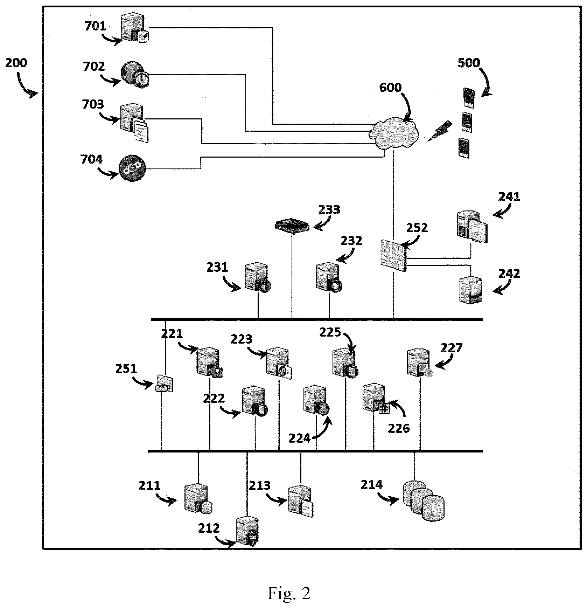

- FIGURE 2 shows the logical architecture 200 of the digital storage computer system. The following is illustrated:
   - for the data layer: the document system database 211, the database of managers and producers 212, the log server 213 and long-term storage 214;
   - for the application layer (business layer): the application server 227, the hashing module 226, the mail server 225, the web-server 224, the control application (dashboard) 223, the notifier 222 and the digital signature suite 221;
   - for the presentation level: the reverse proxy 231, the server for mobile applications 232 and the load balancer 233;
   - for the connectivity part: the internal firewall 251 with router and the external firewall 252 connected to the network 600;
   - for the client side: the local network terminals 241, the data entry totem devices 242 and the mobile devices 500;
   - for the external services part: the signature certifying authority 701, the independent timestamping authority (TSA) 702, a repository of regulations for digitization 703 and access to the peer-to-peer network for access to distributed block lists 704.

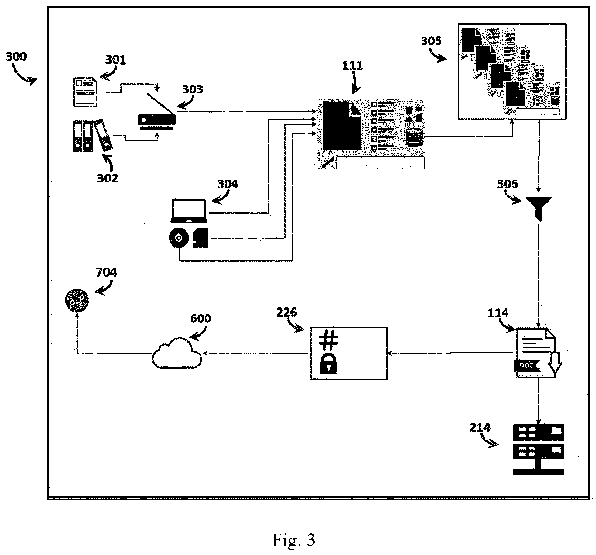

- FIGURE 3 shows a synthetic scheme 300 of operation of the computer system which aggregates in a transfer packet 111 the data coming from the digitization 303 of documents 301 and analogue archives 302 and the natively digital data 304. This packet becomes part of the document archive 305 from which it will be possible to select, by filter 306, one or more packets to be stored. The storage packet 114 thus produced is then transferred to the long-term mass storage 214. At the same time, a digital signature 226 (hash) of packet 114 is added - via IP network 600 - to the list of distributed blocks 704.

### Detailed description of the invention

The present invention will now be described purely by way of non-limiting or binding example with the aid of the figures, which illustrate some embodiments relative to the present inventive concept.

With reference to FIGS. 1 and 3, a possible embodiment of the proposed computer system will be described below, which allows all the operations necessary for the digital storage process 100, which consists of:
- generating, by the producer 101, a transfer packet 111 starting from digitized analogue documents 110 or from natively digital data, including images, audio/video streams, records and rows of databases;
- verifying, by the storage manager 102, the compliance of the data entered with the rules regulating digital storage (one or more reference standards may be included in the system to allow compliance with different standards) with the generation of a verification report 112;
- archiving the transfer packet (only in case of positive outcome of the verification) and creation of a storage packet 113;
- possible authentication and signature of the archiving packet 113 by the storage manager 102, with the insertion of time stamps and geolocation;
- the data is digitally stored in a storage packet 114;
- at the request of an external subject 103 it is possible to issue a copy of the storage packet 114, appropriately authenticated by signature, in the form of a distribution packet 115.

The system is designed so as to be able to generate transfer packets 111 starting from any type of digital data, be it the product of digitization 303 of analog supports 301 or paper archives 302, or natively digital 304. The system is not limited to traditional document containers (PDF, JPEG, TIFF, etc.) but can include in the transfer packet 111 any type of information, binary files, images, audio/video recordings, records and database tables and metadata. The management of the natively digital data, and in particular of the contents of databases and automated information systems, occurs through aggregation, coding and hashing of the records. The metadata associated with the contextualization and reconstruction of the information is then associated with the codified packet.

The transfer packets 111 thus generated are digitally signed by the producer 101 and entered in the document archive 305 after verification of compliance by the manager 102. The system allows adapting - each time - to different regulations and standards of digital storage, such as the OAIS standard or the InterPARES model, and the choice of the reference model can be made by the manager 102 according to the storage needs, directly from the system interface. The authenticity, traceability and compliance of the data will be ensured by the inclusion of time stamps issued by independent certification authorities when the manager 102 affixes the digital signature. The system will also be able to combine the time stamp with the geo-referencing of the device used for the signature, be it a terminal connected to the system or a smartphone that can be accessed remotely. This association can therefore replace the traditional declaration of "date and place" of signature affixing.

In the proposed implementation, the system will be able to use the cryptography and hashing algorithms 226 to guarantee the inalterability of the stored data. A long-term mass storage medium 214 will ensure data legibility over time, counteracting technological obsolescence. For the protection of the data stored, the signature (hash) of the storage packet 114 will be inserted in a distributed list of blocks 704 (blockchain) which will make it impossible to change the data and will give greater reliability to the process of checking the integrity of the packet.

With reference to FIG. 2 below, the logical architecture of the proposed implementation of the storage system is illustrated, which is based on two main subsystems:
- a proprietary document subsystem (DMS) consisting of an application server 227 and a dedicated database 211;
- a storage subsystem, managed by the same application server 227, with access to long-term memory 214.

To this base core is added a presentation level consisting of load balancers 233, reverse proxy 231 and servers for mobile applications 232. There are also a number of accessory features, implemented by means of dedicated servers within the infrastructure or outsourced and accessed via an IP network 600. Connectivity is based on packet-switched protocols on a segmented Ethernet network protected by both internal 251 and external 252 firewalls. The proposed configuration provides a web server 224 for online distribution of content and is also accessible:
- internally, both from terminals 241 and from analogue document acquisition devices 242;
- externally, via an IP network 600, from mobile devices 500.

The document management application (DMS) is central to the system and allows executing operations on data not yet subjected to the storage procedure. In particular, the DMS allows:
- managing, by means of a dedicated database 212, the personal data and the signature parameters of the producers 101 and of the relevant managers 102;
- generating transfer packets 111 from natively digital documents, digitization of analog originals, primitive data, records and database tables, metadata and ancillary information;
- producing transfer reports 112 containing the outcome of the compliance verification by the manager 102, rejecting non-compliant data and reporting the event;
- selecting one or more storage packets 113 by means of semantic searches and filter applications 306 to the document archive;
- using mobile devices via the responsive user interface;
- monitoring the system status by means of a control panel 223.

The storage subsystem implements the actual digital substitute storage by generating storage packets 114 digitally signed by the data manager 102. The system will allow affixing digital signatures using a smart card or by means of electronic devices 500 associated with the digital credentials of the manager 102 and equipped with recognition hardware. When the signature is affixed, a time stamp will be associated with an external Time Stamping Authority (TSA) 702 and the geolocation coordinates.

Once the storage packet 114 has been created, the system automatically transfers it to the long-term memory 214. A copy of the packet 114 is processed to generate the digital signature to be used for integrity checks. The proposed implementation also contemplates the use of lists distributed on peer to peer networks to guarantee the inalterability of documents stored using blockchain technology. It is also possible to:
- request at any time the verification of the integrity of the data stored and produce a report of the verification, highlighting any critical issues by means of notifications to the manager 102;
- consult the data contained in the storage packet 114, producing an event recording with time stamp and geographical coordinates;
- exporting on request distribution packets 115 consisting of certified and authenticated copies - with the signature of the manager 102 - of the data contained in the archive.

The system also includes a series of accessory features implemented with dedicated hardware within the infrastructure or acquired from external service providers. In the proposed embodiment there are:
- a digital signature server 221 that interfaces with the top-level certification authorities 701, connects with external time- stamping services 702 and receives the geolocation coordinates of data entry;
- a notification subsystem 222, equipped with an e-mail server 225, which sends informative reports to the managers 102 upon the occurrence of particular events and configurable through the control panel 223 and which notifies the presence of documents in the queue for storage or approval and signature. The notifications are transmitted via e-mail or directly in push mode to the computers and devices provided;
- a log server 213 that tracks the operations performed, including configuration changes, database alteration, sending notifications, integrity checks, long-term data transfer, accepting requests consultation, etc. One can view and export the contents of the electronic register as well as store it in turn as a digital document.

Finally, it is clear that modifications, additions or variants may be made to the invention described thus far which are obvious to a man skilled in the art, without departing from the scope of protection that is provided by the appended claims.

## Claims

1. Digital electronic storage computer system, **characterized in that** it can generate, in compliance with the applicable regulations, storage packets (114) starting from any type of digital data, whether coming from digitization of analogue media (301), or if originally digital (304) such as containers of documents, images, audio and video flows, binary files, records and database and metadata tables; said records and digital contents being subjected to a storage process which includes aggregation, encoding, extraction of digital marking and association of metadata; said digital data inserted in transfer packets (111) digitally signed by the producer (101) and stored in a document archive (305) upon verification by a storage manager (102); said system generating a verification report (112) and allowing the manager (102) to affix digital signatures with time marking and geolocation information for the purpose of ensuring authenticity and integrity to the storage packet (114); said system allowing the release of copies of the archived data, generating distribution packets (115) authenticated by a storage manager (102); said system being based on a digital platform articulated over two main subsystems to which a presentation level is added constituted by load balancers (233) and reverse proxy (232); said system using packet switching protocols over Ethernet network and including internal (251) and external (252) firewalls to protect the transmitted data; said system providing for a web server (224) for the distribution of the contents and said digital electronic storage system being accessible: a) internally by terminals (241) and analogue document acquisition devices (242); b) externally by means of IP network (600) by mobile devices (500) or web browser; said system comprising:
(A) a document management application provided with dedicated server (227) and database (221) which manages the data not yet subjected to storage procedure and allows:
- managing, by means of a dedicated database (212), the personal data and the signature parameters of the producers (101) and of the managers (102);
- generating the transfer packets (111);
- producing verification reports (112), edited by the manager (102);
- rejecting non-compliant data, reporting the event;
- selecting, from the document archive (305), archive packets (113) by means of semantic searches and filters 306;
- managing the system by means of a control panel (223);
(B) a storage subsystem that generates storage packets (114) digitally signed by the manager (102) by means of smart card, and associates the digital signature with a time marking given by third-party authorities (702) as well as geolocation coordinates; said storage packets (114) being transferred onto a long-term memory (214) and processed with a dedicated server (226) in order to generate a digital marking to be used for the integrity checks; and said subsystem allows:
- requesting the verification of the integrity of the stored data;
- producing a report of the verification, underlining possible critical areas;
- notifying the manager (102) of said critical areas;
- consulting the data contained in the storage packet (114);
- tracking with time marking and geographic coordinates each access to the stored data;
- exporting the stored data in the form of compliant distribution packets (115) authenticated with the signature of the manager (102);
(C) a series of functions made with dedicated hardware or acquired from external suppliers; said functions including:
- a digital signature server (221) capable of being connected with high-level certification authorities (701) and time-stamping services (702); said server also requesting or generating the geolocation coordinates of the data insertion;
- a notification subsystem (222) adapted to automatically notify the managers (102) regarding the verification of events that require attention; said events can be defined by the user by means of control panel; said subsystem also able to autonomously notify the presence of documents in queue for approval and signature;
- an electronic mail server (225) which forwards the notifications to the managers (102);
- modifications of the configuration, alteration of the databases, sending of notifications, integrity checks, transfer of data to the long-term memory, acceptance of consultation requests; said server log allowing digitally viewing, exporting or storing the content of the electronic register.

2. Digital electronic storage system, according to the preceding claim 1, **characterized in that** said system stores, in order to reinforce the integrity and the inalterability of the stored data, the digital marking of the storage packet (144) in a distributed list based on peer-to-peer network with blockchain technology; said list being constituted by concatenated data blocks containing the digital marking of the preceding elements, so as to ensure that the alteration of one block of the list is immediately identified and corrected; said marking can be recovered at any moment and used for validating the information contained in the memory of the system.

3. Digital electronic storage system, according to any one of the preceding claims 1 or 2, **characterized in that said system** allows the storage managers (102), by means of suitable graphical interface, to define criteria of compliance and validity pertaining to different legal electronic storage standards; said criteria can be inserted in a database and applied in a block, allowing the generation of storage packets compliant with different laws depending on requirements; said system also allowing being connected to the online repositories (703) of the storage standard originating organizations so as to automatically update the criteria database.

4. Digital electronic storage system, according to any one of the preceding claims, **characterized in that said system** includes a server for mobile applications (232) which increases the availability of the system, allowing the users of portable electronic devices (500) to use a proprietary application software suite designed for extending the capacities of the system by providing additional functions with respect to the simple web access, which exploit the potentials of the device; said functions including but not limited to: a) use of the device (500) for acquiring and digitizing documentation to be inserted in the system; b) local replication of the control panel (223); c) reception of notifications directly on device (500) with push method.

5. Digital electronic storage system, according to any one of the preceding claims, **characterized in that said system** includes, among the accessory functions, a scheduling subsystem for the creation of storage packets and for the integrity checks; said subsystem allowing the planning of operations to be automatically executed without requiring manual intervention by the manager (102), who only intervenes in the case of irregular situations or immediately-notified errors; said subsystem allowing the managers (102) to pre-authorize the finishing of the queues of documents waiting to be stored or consulted, by using the integrated digital signature suite (221) for validating the generated or exiting packets.

6. Digital electronic storage system, according to any one of the preceding claims, **characterized in that said system** allows, by means of proprietary application, using mobile devices (500) provided with digital fingerprint readers or other recognition hardware, for the affixing of digital signatures; said devices being previously associated in a secure manner with the digital credentials of the managers (102) contained in the digital signature suite (221).

7. Digital electronic storage system, according to any one of the preceding claims, **characterized in that** said system is provided with a tool for planning the electronic storage process, conceived as a support instrument for the selection of the documents to be dematerialized and stored; said tool having a graphical interface similar to that of the document system and allowing: a) carrying out short-term, medium-term and long-term planning; b) indicating times and modes with which the system will automatically initiate the storage process; c) receiving suggestions, based on the law and on the set of rules selected for storage, with regard to the dematerialization of analogue documents, indicating - in the case of elimination of the originals - which documents can be processed with only internal resources and which require the intervention of a third-party authority.

8. Digital electronic storage system, according to any one of the preceding claims, **characterized in that** said system is capable of sending, via data communication by using the IP network 600 or another communication channel, the requested distribution packets (115) directly on a remote processor or mobile device (500) selected by the requesting party; said distribution packets (115) being authenticated by means of signature of the manager (102).
